# EUROPEAN PATENT APPLICATION

(11) **EP 0 987 128 A2**
(43) Date of publication of application: **22.03.2000**
(21) Application number: 99117581.1
(22) Date of filing: 06.09.1999
(51) Int. Cl.: B60C 9/02, B60C 9/00

(54) **Tires with high strength reinforcement in the carcass**

(30) Priority: 14.09.1998 US 152412
(71) Applicant: THE GOODYEAR TIRE & RUBBER COMPANY, Akron, Ohio 44316-0001 (US)
(72) Inventor: de Boisfleury, Florence, 8019 Strassen (LU); Cohen, Albert, 8156 Bridel (LU); Van Nguyen, Gia, 6730 Rossignol (BE); Kim, Dong Kwang, Akron, Ohio 44333 (US); Prakash, Amit, Hudson, Ohio 44236 (US)
(74) Representative: Leitz, Paul

(57) **Abstract**

A strip of tire ply stock is reinforced with steel cords wherein the steel cords are constructed of high strength wire filament having at least a tensile strength of -2000 x D + 4400 MPa where D is the filament diameter in mm. Tires are constructed with the ply stock in the carcass.

## Description

The present invention relates to cord, cord reinforced plies and radial tires for vehicles. Radial tires are those tires wherein the cords of the carcass plies, which extend from one bead to the other, lie substantially on radial planes. More particularly, the present invention relates to a structure of one or more plies formed of a cord reinforced composite having rubber where preferably the structure is for tires, such as for a tire carcass wherein at least one of the plies in the carcass has the cords therein biased with respect to the direction of rotation of the tire.

Reinforced elastomeric articles are well known in the art. For example, conveyor or like type belts, tires, etc., are constructed with cords of textile and/or fine steel wire filaments or strands. In particular, belts used in pneumatic tires are constructed of up to eight ply layers with the cord reinforcement of adjacent plies being biased with respect to the direction of movement of the tire where it is desired to reinforce in both the lateral direction and the direction of rotation of the tire. Further, cords made of strands of multi-twisted filaments of fine wire with a single strand construction having two or more filaments and a wrap filament thereabout to reinforce the cord structure have also been known. In some cases, the reinforcement includes the use of single strand cords of multi-filaments which are not twisted about each other but rather twisted altogether as a bundle or bunch (bunched cord) to simplify the cord construction, as disclosed in assignees's Patent No. 4,947,636 which is incorporated by reference in its entirety herein. Higher fatigue life requirements for composites in tires have resulted in cords with smaller filament diameter requiring more filaments in the cord to obtain the necessary strength.

Two ply tire belts for passenger and light truck tires can have cords of 2x.255ST and 2+2x.32-.40ST, respectively. An example of the first construction is described in Assignee's Statutory Invention Registration H1333, issued July 5, 1994, which application is incorporated by reference in its entirety herein, wherein multi-filament cords such as 2X.255ST are disclosed. This designation means one cord of two (2) 0.255 mm. diameter filaments. An example of the 2+2x.32-.40ST cord is disclosed in Assignee's U.S. Patent No. 5,242,001, which is incorporated in its entirety by reference herein. This designation means one cord of four (4) 0.32-.40 mm. diameter filaments (with two (2) filaments twisted at a shorter lay length than the other two (2) filaments). Multi-filament cords such as 2+2x.32-.40ST have been found necessary to meet the higher demand of strength for composites in tire belts, typically used in light truck applications. Both of these cords were made of super tensile (ST) steel as defined hereinafter. Though cord designs incorporating super tensile (ST) steel have proven effective, there is a continuing need to develop lighter weight cord constructions with improved characteristics, such as higher corrosion propagation resistance and improved tire performance, over recent high tensile and super tensile constructions.

The described cord constructions generally have not found use in larger tires, such as off-the-road (OTR) tires, because they were not strong enough. Even with the advent of high tensile filament such as in Assignee's 2+2x cord, disclosed for use in passenger and light truck tires, the large OTR tires continue to use traditional constructions such as 7x7x.25+1HT and 3x7x.22HE comprising seven strands each of seven .25 mm diameter high tensile filaments that are twisted together and spiral-wrapped; and three strands each of seven .22 mm diameter high tensile filaments that are twisted together, respectively. The steel cord cable currently used for ply reinforcement in OTR tires for sizes 36.00R51 and larger is stranded cord of high tensile tire cord filament such as 7x19x.20+1HT cord comprising seven strands each of nineteen .20 mm diameter high tensile filaments that are twisted together and spiral-wrapped. These cords were made of high tensile (HT) steel as defined hereinafter.

More recently, OTR tires can be constructed of multiple plies belts or single ply with reinforcing cords such as 27x.265ST or 5+8+14x.265ST+1 as disclosed in Assignee's Patent No. 5,318,643 which patent is incorporated by reference in its entirety herein. Still, current steel cord constructions have breaking load and cable gauge limitations preventing the needed design inch-strength from being achieved for tires larger than 40.00R57 used on trucks and earthmovers weighing up to and sometimes more than 320 tons. In addition, there is a need to increase the rivet area in the ply and belt, i.e., the space between the cords, for tire sizes of 36.00R51 and larger so that more rubber can penetrate between the cords during tire manufacture to enhance the quality of calendered treatment by preventing "weak rivet" or "loose coat" (which can result in trapped air in tires).

Many problems have had to be overcome even after development of the above higher strength filaments and cords. The higher strength steel alloys resulted in changes in cord modulus giving rise to the possibility of adjusting the parameters of a tire belt gross load which depends upon three factors assuming adequate cord to rubber adhesion. The factors are cord modulus, the ratio of cord volume to rubber volume (often expressed as the number of cord ends per inch (epi)), and the angle of cord reinforcement. Further, as the angle of cord reinforcement approaches the direction of rotation of the tire, the support from the reinforcement in the lateral direction moves toward zero. An increase in the above-mentioned two other cord related factors, i.e., the cord modulus and the ratio of cord volume to rubber volume, generally results in an increase of weight for the belt. Added weight can mean added cost, higher rolling resistance and lower fuel economy of a tire. Simply using lighter cords with a lower modulus does not solve the problem because, even though they have lower weight, the lower cord modulus must be offset by increasing the ratio of cord to rubber volume. This increase in cord volume is limited by the physical size of the cord and the resulting spacing between the cords which governs the amount of rivet, i.e., the ability of the rubber to penetrate between the cords for good cord to rubber adhesion.

It is an object of the present invention to determine cord structures which could take advantage of a new cord modulus while not adversely affecting cord volume to rubber volume ratio on lateral reinforcement so as to obviate the problems and limitations of the prior art tires and cord constructions.

It is another object of the present invention to provide cord structures using ultra tensile wire which results in lighter weight tires.

It is still another object of the present invention to provide cord structures using ultra tensile wire which results in tires with higher corrosion propagation resistance and more rivet leading to improved tire performance.

### Summary of the Invention

The present invention relates to a pneumatic tire with a carcass having parallel cords where each cord comprises cord for multiple filaments having a diameter (D) ranging from 0.07 to 0.45 mm and each filament having at least a tensile strength of -2000 x D + 4400 MPa, where D is the filament diameter.

### Brief Description of the Drawings

Figure 1 illustrates the cross section of a first embodiment of a tire according to the present invention;
Figure 2 illustrates a partial cross section of a second embodiment of a tire according to the present invention;
Figure 3 shows the cross section through a cord in accordance with an embodiment of the present invention;
Figure 4 is a schematic illustration in cross section of a composite, such as two abutted plies, in accordance with the present invention; and
Figures 5 through 16 show the cross section through a cord in accordance with different embodiments of the present invention.

### Detailed Description of the Invention

There is disclosed a pneumatic tire with a carcass having parallel cords, two sidewalls spaced apart a distance, which in the axial direction determines the general width of the tire section, two beads from which the ends of the cords of the carcass extend, a tread disposed on the crown of said carcass, a belt structure that is circumferentially inextensible interposed between the tread and the carcass, and at least one carcass ply disposed in said sidewalls between said two beads and said crown of said carcass, said belt structure having a width that is substantially equal to that of the tread and having a carcass ply of elastomeric fabric reinforced with metallic cords, said metallic cords in the carcass ply being comprised of a plurality of filaments having a diameter (D) ranging from 0.07 to 0.45 mm, each filament having a tensile strength of -2000 x D + 4400 MPa, where D is the filament diameter.

After considerable study, effort, testing and time, the present invention provides cords and plies for passenger, light truck, truck, medium truck and OTR tires which substantially reduce the size and sometimes the number of filaments for the load ranges encompassed by this range of tires. While the reduction in the number of filaments leads one to expect a reduction in weight, this is not necessarily the case since the prior art materials require that the filament size also be increased in order to obtain the needed strength for the tire. However, with the use of Ultra Tensile steel for the cord constructions, the number and/or the size of the filaments can be decreased while maintaining or even strengthening the tire. Other advantages which exist in the present invention include lighter tires, improved rolling resistance, higher corrosion propagation resistance, and a reduction in the cord treatment gauge between the cord layers in the carcass. A weight reduction due to a reduction in weight of reinforcement as well as a reduction in an amount of gum gauge also results in a reduction in manufacturing cost and improved fuel economy for the tires of the present invention. Moreover, it is believed that improved temperature transfer can be achieved with the new cord designs of the invention to lengthen the life and improve the operating performance of tires incorporating these cords.

As used herein and in the Claims:
"Axial" and "axially" are used herein to refer to lines or directions that are parallel to the axis of rotation of the tire.
"Bead" means that part of the tire comprising an annular tensile member wrapped by ply cords and shaped, with or without other reinforcement elements such as flippers, chippers, apexes, toe guards and chafers, to fit the design of the tire rim.
"Belt structure" means at least two layers or plies of parallel cords, woven or unwoven, underlying the tread, unanchored to the bead, and having both left and right cord angles in the range from about 17 to about 70 degrees with respect to the equatorial plane (EP) of the tire.
"Carcass" means the tire structure apart from the belt structure, the tread, the undertread and the sidewall rubber over the plies, but including the beads.
"Cord" means one or more of the reinforcement elements, formed by two or more filaments/wires which may or may not be twisted or otherwise formed and which may further include strands that may or may not be also so formed, of which the plies in the tire are comprised.
"Crown" means that portion of the tire within the width limits of the tire tread.
"Density" means weight per unit length.
"Equatorial plane (EP)" means the plane perpendicular to the tire's axis of rotation and passing through the center of the tire's tread.
"Gauge" means material thickness.
"High Tensile Steel (HT)" means a carbon steel with a tensile strength of at least 3400 Mpa @ 0.20 mm filament diameter.
"Super Tensile Steel (ST)" means a carbon steel with a tensile strength of at least 3650 Mpa @ 0.20 mm filament diameter.
"Ultra Tensile Steel (UT)" means a carbon steel with a tensile strength (-2000 x D) + 4400 MPa, where D is the filament diameter in mm. For example, of at least 4000 Mpa @ 0.20 mm filament diameter.
"Load Range" means load and inflation limits for a given tire used in a specific type of service as defined by tables in The Tire and Rim Association, Inc., 1989 Year Book.
"Radial" and "radially" are used to mean directions radially perpendicular from the axis of rotation through the tire.
"Rivet" means the open space between cords in a layer.
"Section width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.
"Stiffness ratio" means the value of the control belt structure stiffness divided into the value of another belt structure stiffness when the values are determined by a fixed three (3) point bending test having both ends of the cord supported and flexed by a load centered between the fixed ends.

The cords for use in the present invention may comprise of a number of constructions both with or without a spiral wrap. For example, representative constructions include 2x, 3x, 4x, 5x, 6x, 7x, 8x, 11x, 12x, 27x, 1+2, 1+3, 1+4, 1+5, 1+6, 1+7, 1+8, 1+14, 1+15, 1+16, 1+17, 1+18, 1+19, 1+20, 1+26, 2+2, 2+5, 2+6, 2+7, 2+8, 2+9, 2+10, 2/2, 2/3, 2/4, 2/5, 2/6, 3+2, 3+3, 3+4, 3+6, 3+8, 3+9, 3/9, 3+9+15, 4+9, 4+10, 4x4, 5/8/14, 7x2, 7x3, 7x4, 7x7, 7x12 and 7x19. Representative cord constructions with a spiral wrap include 2+1, 3+1, 5+1, 6+1, 7+1, 8+1, 11+1, 12+1, 1+4+1, 1+5+1, 1+6+1, 1/6+1, 1+7+1, 1+8+1, 1+14+1, 1+15+1, 1+16+1, 1+17+1, 1+18+1, 1+19+1, 1+20+1, 1+26+1, 2+7+1, 2+8+1, 2+9+1, 2+10+1, 3+9+1, 3/9+1, 3+9+15+1, 7x2+1, 7x12+1, 7x19+1 and 27+1.

The cords listed above are particularly suited for use in a pneumatic tire. The pneumatic tire may be a bias or radial ply tire. When used in the carcass ply, the preferred cords are 2x, 3x, 4x, 5x, 6x, 8x, 11x, 12x, 1+2, 1+3, 1+4, 1+5, 1+6, 1+7, 1+8, 1+14, 1+15, 1+16, 1+17, 1+18, 1+19, 1+20, 2+1, 2+7, 2+8, 2+9, 2+10, 2/2, 2/3, 2/4, 2/5, 2/6, 3+1, 3+2, 3+3, 3+4, 3+8, 3+9, 3/9, 3+9+15, 4+9, 4+10, 5/8/14, 7x12, 7x19, 5+1, 6+1, 7+1, 8+1, 11+1, 12+1, 2+7+1, 1+4+1, 1+5+1, 1+6+1, 1+7+1, 1+8+1, 1+14+1, 1+15+1, 1+16+1, 1+17+1, 1+18+1, 1+19+1, 1+20+1, 3+9+1, 3/9+1, 7x12+1 and 7x19+1.

The cords for use in the present invention are preferably of a multilayered construction. A multilayered construction is one in which the diameter of the smallest circle enveloping the cross-section of the cord is at least equal or greater than three times the diameter of the filaments. When a cord has a diameter of at least three times the diameter, the cord is considered a two-layered cord. If the cord has a diameter of at least five times the diameter of the filament, then the cord is considered herein as a three-layered cord.

The cords for use in the present invention may contain filaments of the same or different diameters.

In accordance with one embodiment of the invention, the number of inner or core filaments equals from 2 to 4 and each filament having a diameter D₁. The number of outer or sheath filaments equals from 4 to 10 and each filament having a diameter D₂. In accordance with this embodiment, the spacing between the parallel outer filaments is equal to or greater than 0.02 mm to permit good rubber penetration.

The filaments which may be used to make the cords of the present invention may have a diameter ranging from 0.07 mm to 0.45 mm. For some applications, it is contemplated that the preferred diameter may be less than 0.1 mm or less than 0.12 mm. For example, a preferred range may be from 0.07 mm to no greater than 0.1 mm or from 0.07 mm to no greater than 0.12 mm. In other applications, it is contemplated that the preferred diameter of the filament ranges from 0.14 to 0.43 mm. A particularly preferred filament ranges from 0.15 to 0.38 mm.

Further, many of the above described novel cords result in lower linear density in the reinforcement for which they are used which again results in less weight and lower cost for the reinforcement and its product, be it the tire, the belt or any other reinforced elastomeric.

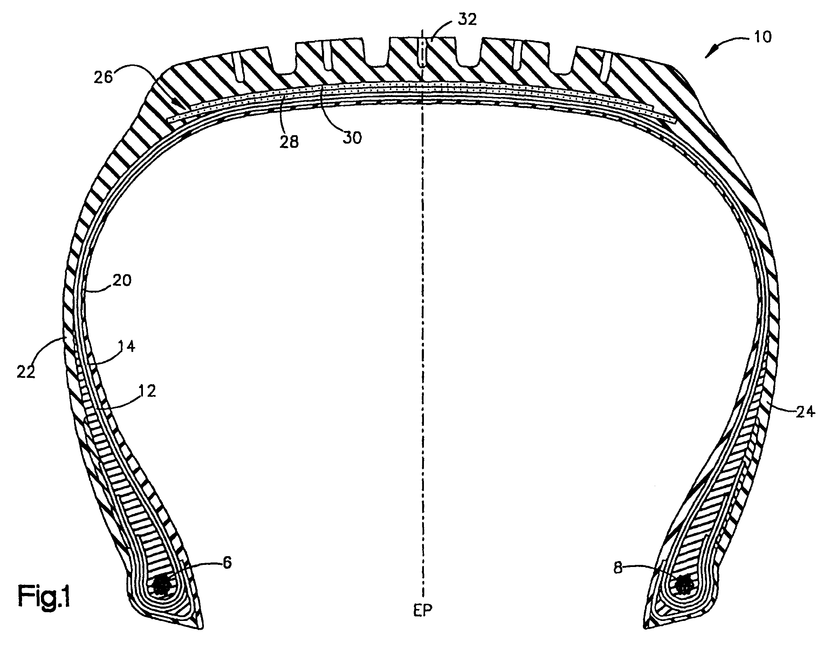

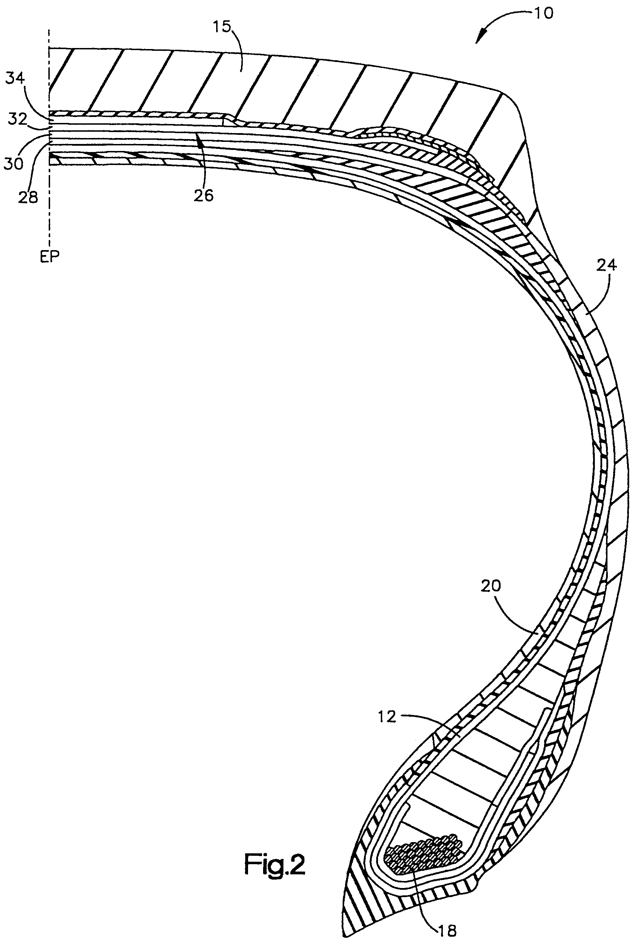

Referring to Figures 1 and 2 of the drawings, plies 12 and 14 are shown within a pneumatic tire 10 with a radial carcass wherein like elements have received like reference numerals. For the purposes of the present invention, a tire has a radial ply carcass structure when the cords of the carcass reinforcing ply, or plies 12,14 are oriented at angles in the range of 75° to 90° with respect to the equatorial plane (EP) of the tire.

In the instance where the metallic cords of the present invention are used to reinforce the carcass, only one of the two plies, if two are used, should be so reinforced. The other ply should be reinforced with some other form of reinforcement. It is preferred that, if two carcass plies are used, the metallic cord reinforced ply be the bottom (inner) carcass ply 14. Representative examples of reinforcement that can be used in the other nonmetallic reinforced carcass ply is rayon, polyester and nylon.

The metallic cord reinforced carcass ply 12 has a layer of steel cords 30 arranged so as to have from about 8 to about 20 ends per inch (EPI) when measured in a tire circumferential direction at a location having a tire maximum width (MW). Preferably, the layer of steel cords 30 are arranged so as to have about 12 to about 16 ends per inch (EPI) at the location having a tire maximum width MW. In terms of metric units, the steel cords are arranged as to have from 3 to 8 ends per cm (EPC) when measured in a tire circumferential direction at a location having a tire maximum width. Preferably, the EPC ranges from 4 to 7 EPI. The above calculations for ends per inch are based upon the range of diameters or the overall cords, strength of the filaments and cords as well as the required strength requirement for the single carcass ply. For example, the high number of ends per inch would include the use of a lower diameter wire for a given strength versus a lower number of ends per inch for a lower diameter wire for the same strength. In the alternative, if one elects to use a monofilament of a given diameter, one may have to use more or less ends per inch depending on the strength of the wire.

The tire 10 has a pair of substantially inextensible annular beads 16,18 which are axially spaced apart from one another. Each of the beads 16,18 is located in a bead portion of the tire 10 which has exterior surfaces configured to be complimentary to the bead seats and retaining flanges of a rim (not shown) upon which the tire 10 is designed to be mounted. Plies 12,14 may be of side-by-side reinforcing cords of polyester or other material, or steel cord of the present invention and extend between the beads 16,18 with an axially outer portion of the carcass structure folded about each of the beads. While in the embodiment of Figure 1, the carcass ply structure comprises two plies 12,14 of reinforcing material, it is understood that one or more carcass plies of any suitable material may be employed in certain embodiments and one or more plies of reinforcement according to this invention may be used as well.

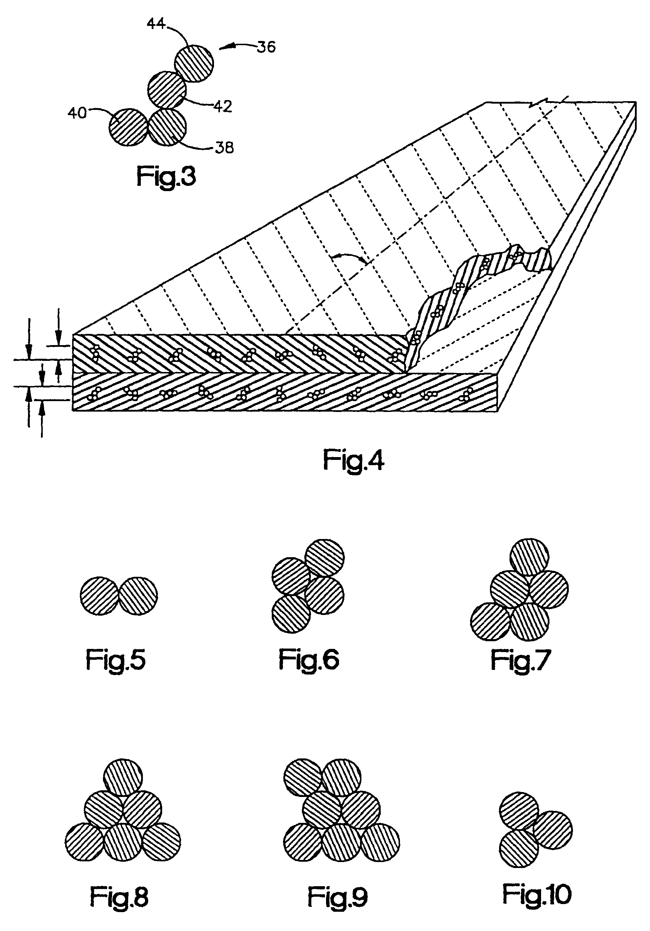

A layer of a low permeability material 20 may be disposed inwardly of the carcass plies 12,14, and contiguous to an inflation chamber defined by the tire and rim assembly. Elastomeric sidewalls 22,24 are disposed axially outwardly of the carcass structure. A circumferentially extending belt structure 26 comprising in the embodiments shown two layers of belts 28,30 (Figure 1), or four layers of belts 28,30,32,34 (Figure 2), each of which preferably includes steel reinforcing cords 36 as shown in Figure 3. The belt structure 26 of Figure 2 is characterized by the cords 36 having filaments with a tensile strength of at least 4000 MPA [N/mm²] (called "ultra tensile" herein) for filaments with a 0.20 mm diameter. For example, cord 36, as shown in Figure 3, has four filaments 38, 40, 42 and 44 (38-44) of ultra tensile steel wire. While two and four layer belts are illustrated in Figures 1 and 2, respectively, other numbers of belts can be substituted.

It will be appreciated that other laminates can be formed using principles of the present invention for reinforcing other articles such as industrial belts and that a single ply of the present invention can be used with known or conventional plies to also form new useful reinforced composite structures.

In a working example, the cords 36 are comprised of four filaments 38-44 of finely drawn, ultra tensile steel wire. There are a number of metallurgical embodiments which result in the tensile strength defined above, i.e. at least 4000 MPA, as ultra tensile (UT). One way of achieving UT strength is by merging the proper process as disclosed in U.S. Patent No. 4,960,473, which is hereby incorporated by reference in its entirety herein, with a carbon rod microalloyed with one or more of the following elements: Cr, Si, Mn, Ni, Cu, Co, V and B. The preferred chemistry is listed below:

| | |
|---|---|
| C | 0.88 to 1.0 |
| Mn | 0.30 to 0.50 |
| Si | 0.10 to 0.3 |
| Cr | 0.10 to 0.4 |
| V | 0 to 0.1 |
| Cu | 0 to 0.5 |
| Ni | 0 to 0.5 |
| Co | 0 to 0.1 |
| the balance being iron and residuals | |

The resulting rod is then drawn to a tensile strength equivalent to 4000 Mpa @ 0.20 mm.

TABLE 1 below gives calculated strength level description for ultra tensile filaments in comparison to previous high and super tensile steel filaments having a filament diameter of 0.20 mm. The ultra tensile steel has a higher value than any previously used steel cord or filament.

**TABLE 1**

| **HIGH TENSILE, SUPER TENSILE & ULTRA TENSILE STEEL CORD** **Strength Level Description** | | | |
|---|---|---|---|
| | High Tensile (HT) | Super Tensile (ST) | Ultra Tensile |
| Rating | 100 | 107 | 117 |
| Tensile Strength (MPa) for filament diameter (D) | 3400 | 3650 | 4000 |
| Tensile Strength (MPa) for filament diameter (D) | -1400xD + 3680 | -2000xD + 4050 | -2000xD + 4400 |

The following TABLE 2 shows other embodiments of ultra tensile ply structures matched for comparison with the former ply structures which they replace. Some former plies incorporate polyester or high tensile (HT) steel.

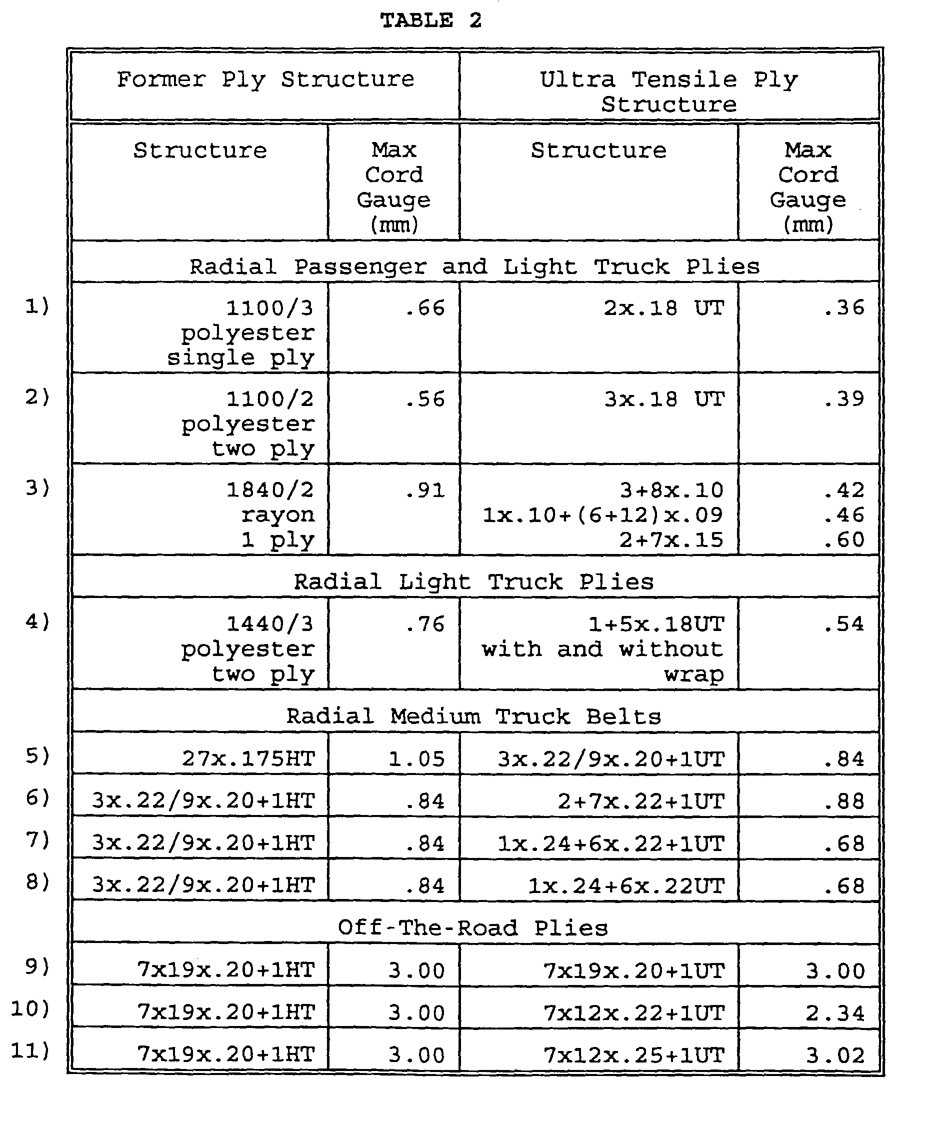

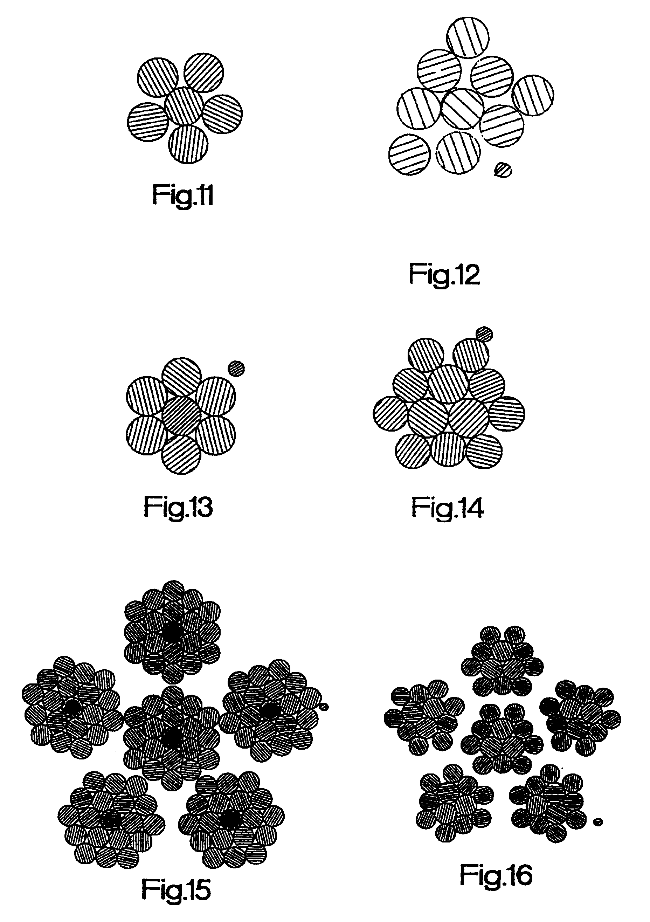

Candidates 1 and 2 above in TABLE 2 and illustrated in Figures 5 and 10, show a replacement of polyester ply with steel ply. The ply structures incorporating UT steel filaments are stronger and reduce the gauge and cost of the material, as compared with the previously noted former polyester ply structures making the tires lighter in weight and less costly.

Candidate 4, above in TABLE 2, is related to radial light truck plies and is illustrated in Figure 11, shows a replacement of polyester ply with steel ply.

Further, Candidates 5, 6, 7 and 8 above in TABLE 2, are related to radial medium truck plies and are illustrated in Figures 14, 12 and 13. These candidates show a replacement of high tensile ply configurations with ultra tensile steel ply configurations. The ply structures of UT steel filaments are stronger and reduce gauge material and cost as compared with the previously noted former high tensile ply structures making the tires lighter in weight and less costly.

Candidates 9, 10 and 11 above in TABLE 2, are related to off-the-road plies as illustrated in Figures 15 and 16. These candidates show a replacement of a high tensile ply configuration, as shown in Figure 15, with the corresponding ultra tensile steel ply configurations of Figures 15 and 16. As in the previous cases, the ply structures of UT steel filaments are stronger and reduce gauge material and cost as compared with the previously noted former high tensile ply structures making the tires lighter in weight and less costly.

TABLE 3 below compares a current two-ply P225/P75R15 passenger tire with an ultra tensile ply structure. With the candidate 1, equal strength was achieved with lower tire gauge, an increase in EPI, and a slight increase in weight. With candidate 2, equal strength was achieved with lower tire gauge, an equal EPI and a decrease in tire weight.

With candidate 1, the 1100/2 polyester configurations of Plies 1 and 2 were replaced with 2x.18 UT configuration. In this case, the EPI increased while maintaining an equal strength, a lower tire gauge and a lower tire weight. With candidate 2, the 1100/2 polyester configuration of Plies 1 and 2 were replaced with 3x.18 UT configuration. In this case, the strength and EPI remained constant while achieving a lower tire gauge and a lower tire weight.

**TABLE 3**

| **ULTRA TENSILE STEEL CORD BENEFITS PLY - PASSENGER TIRES P225/75R15** | | | | | |
|---|---|---|---|---|---|
| | Current Belt Structure | | Ultra Tensile Belt Structure | | Benefits |
| Two-Ply | Construction | EPI | Construction | EPI | |
| 1) Ply 1 | 1100/2 Poly | 30 | 2x.18 UT | 43 | Equal Strength |
| Ply 2 | 1100/2 Poly | 30 | | | Lower Tire Weight |
| | Gauge 0.084 in Weight 3.4 lbs | | Gauge 0.044 in Weight 2.6 lbs | | (.8 lbs lower) Lower Tire Gauge |
| 2) Ply 1 | 1100/2 Poly | 30 | 3x.18 UT | 30 | Equal Strength |
| Ply 2 | 1100/2 Poly | 30 | | | Lower Tire Weight |
| | Gauge 0.084 in Weight 3.4 lbs | | Gauge 0.044 in Weight 2.6 lbs | | (.8 lbs lower) Lower Tire Gauge |

TABLE 4 compares a current two-ply polyester construction with an ultra tensile construction in LT235/85R16 radial light truck tires of a load range E. Referring to the candidate, an equal strength was maintained while achieving lower tire weight and lower tire gauge. When the 1440/3 polyester configuration of Plies 1 and 2 were replaced with 1+5x.18 UT configuration, the EPI slightly increased, and an equal strength was achieved with a reduction in tire weight and tire gauge.

**TABLE 4**

| **ULTRA TENSILE STEEL CORD BENEFITS PLY - RADIAL LIGHT TRUCK TIRES LT235/85R16 LR-E** | | | | | |
|---|---|---|---|---|---|
| | Current Belt Structure | | Ultra Tensile Belt Structure | | Benefits |
| Two-Ply | Construction | EPI | Construction | EPI | |
| 1) Ply 1 | 1440/3 Poly | 27 | 1+5x.18 UT | 28 | Equal Strength |
| Ply 2 | 1440/3 Poly | 27 | | | Lower Tire Weight |
| | Gauge 0.118 in Weight 6.6 lbs | | Gauge 0.061 in Weight 5.7 lbs | | (0.9 lbs lower) Lower Tire Gauge |

By utilizing ultra tensile steel filament of at least 4000 MPa at a 0.20 mm diameter, several options become available in steel cord design for Off-The-Road (OTR) pneumatic tires, as described in TABLE 12 below. Utilization of the higher tensile strength materials combined with simplification and/or variations of current steel cord construction will satisfy the OTR tire requirements of higher inch strength while increasing the rivet area between cords. For example, the steel cord cable construction currently used for ply reinforcement in OTR tires for sizes 36.00R51 and larger is 7x19x.20+1 HT. The filament tensile strength is specified as 3300 MPa at 0.20 mm filament diameter. The average cable breaking load is 11,600 N and is used at 6.4 ends/inch thus giving an inch strength of 74,240 N which satisfies the design requirement of 73,975 N. The cable gauge of 3.0 mm yields a rivet of 0.965 mm.

A major design parameter which may be varied in a reinforced composite of elastomer is the end count in end per inch (EPI), i.e., the number of cords per unit length in the lateral direction to the direction in which the elastomer is being reinforced. TABLE 12 below lists examples of a current high tensile construction and possible ultra tensile constructions, see candidates 1-3 and Figures 15 and 16, showing the general increase in rivet as the increased strength of the ultra tensile samples allowed a reduction in EPI. At the other extreme, as cord diameter is reduced and the end count increased to off-set it, the rivet is reduced. Generally, a minimum rivet of 0.018" (0.46 mm) must be maintained to give proper penetration of elastomers between cords when they are so embedded. This minimum rivet is particularly obtainable with the smaller diameter and simpler (less filaments in a cord) cord construction of candidates 1, 2 and 3.

**TABLE 5**

| Construction | Gauge (mm) | Break Load (N) | EPI | Inch-Stretch (N) | Rivet (mm) |
|---|---|---|---|---|---|
| | | | | | |

| Current Construction | | | | | |
|---|---|---|---|---|---|
| 7x19x.20+1HT | 3.0 | 11,600 | 6.4 | 74,240 | .965 |

| Ultra Tensile Construction | | | | | |
|---|---|---|---|---|---|
| 1. 7x19x.20+1UT | 3.0 | 13,570 | 5.5 | 74,630 | 1.62 |
| 2. 7x12x.22+1UT | 2.34 | 10,500 | 7.1 | 74,550 | 1.24 |
| 3. 7x12x.25+1UT | 3.02 | 13,000 | 5.7 | 74,100 | 1.44 |

Candidates 1, 2 and 3 satisfy the tire design requirements of 74,240 N inch-strength for 36.00R51. through 40.00R57 OTR tires while providing increased rivet in all cases (greater than 0.96 mm). This increased rivet allows more rubber penetration between cords giving greater strike-through. In addition, candidate 1, when used at 6.4 EPI (not shown), has a rivet area between cords of 0.965 mm (as with the current construction) while providing an inch-strength of 83,200 N. This value of inch-strength exceeds the requirement of 79,800 N/inch for a new, larger 44.00R57 OTR tire.

It is apparent that there has been provided, in accordance with this invention, a strip of ply stock reinforced with steel monofilaments or cords for use in a tire. The strip of reinforced, ply stock satisfies the objects, means and advantages set forth hereinbefore.

While the invention has been described in combination with embodiments thereof, it is evident that many alternatives, modifications and variations will be apparent to those skilled in the art in light of the foregoing description. Accordingly, it is intended to embrace all such alternatives, modifications and variations as fall within the spirit and scope of the appended claims.

## Claims

1. A pneumatic tire with a carcass having parallel cords, two sidewalls spaced apart a distance, which in the axial direction determines the general width of the tire section, two beads from which the ends of the cords of the carcass extend, a tread disposed on the crown of said carcass, a belt structure that is circumferentially inextensible interposed between the tread and the carcass, and at least one carcass ply disposed in said sidewalls between said two beads and said crown of said carcass, said belt structure having a width that is substantially equal to that of the tread and having a carcass ply of elastomeric fabric reinforced with metallic cords, said metallic cords in the carcass ply being characterized by a plurality of filaments having a diameter (D) ranging from 0.07 to 0.45 mm, each filament having a tensile strength of -2000x D + 4400 MPa, where D is the filament diameter in mm.

2. The pneumatic tire defined in claim 1 characterized in that D ranges from 0.07 to 0.43 mm.

3. The pneumatic tire defined in claim 1 wherein the cord construction is selected from the group consisting of 2x, 3x, 4x, 5x, 6x, 7x, 8x, 11x, 12x, 27x, 1+2, 1+3, 1+4, 1+5, 1+6, 1+7, 1+8, 1+14, 1+15, 1+16, 1+17, 1+18, 1+19, 1+20, 1+26, 2+1, 2+2, 2+5, 2+6, 2+7, 2+8, 2+9, 2+10, 2/2, 2/3, 2/4, 2/5, 2/6, 3+1, 3+2, 3+3, 3+4, 3+8, 3+9, 3/9, 3+9+15, 4+9, 4+10, 5/8/14, 7x12, 7x19, 7x2, 5+1, 6+1, 7+1, 8+1, 11+1, 12+1, 2+7+1, 1+4+1, 1+5+1, 1+6+1, 1+7+1, 1+8+1, 1+14+1, 1+15+1, 1+16+1, 1+17+1, 1+18+1, 1+19+1, 1+20+1, 3+9+1, 3/9+1, 7x12+1 and 7x19+1.

4. The pneumatic tire defined in claim 3 wherein said cord construction is 1+5.

5. The pneumatic tire of claim 1 wherein D is less than 0.12 mm.

6. The pneumatic tire of claim 3 wherein the cord construction is 3+8.

7. The pneumatic tire of claim 1 wherein the cord is a multilayered construction.

8. The pneumatic tire of claim 7 wherein the cord has two layers.

9. The pneumatic tire of claim 7 wherein the cord has three layers.

10. The pneumatic tire of claim 7 wherein D ranges from 0.07 to no greater than 0.12 mm.
